# EUROPEAN PATENT SPECIFICATION

(11) **EP 0 453 010 B1**
(45) Date of publication and mention of the grant of the patent: **05.06.1996**
(21) Application number: 91200627.7
(22) Date of filing: 20.03.1991
(51) Int. Cl.: C08K 5/00, C08L 73/00

(54) **Copolymer compositions comprising a copolymer and one or more lubricating additives**
Copolymerzusammensetzungen enthaltend ein Copolymer und ein oder mehrere Gleitmittelzusätze
Composition de copolymère contenant un copolymère et un ou plusieurs additifs lubrifiants

(30) Priority: 03.04.1990 GB 9007432
(43) Date of publication of application: 23.10.1991
(73) Proprietor: SHELL INTERNATIONALE RESEARCH MAATSCHAPPIJ B.V., NL-2596 HR Den Haag (NL)
(72) Inventor: Smutny, Edgar Josef, Houston, Texas 77006 (US); Gergen, William Peter, Houston, Texas 77002 (US); Broekhuis, Antonius Augustinus, NL-1031 CM Amsterdam (NL); Groenland, Franciscus Christiaan, NL-1031 CM Amsterdam (NL); Beijen, Johan Maria, NL-1031 CM Amsterdam (NL)

(56) References cited:
- EP-A- 0 326 224
- Society of Plastics Engineering, Technical Papers. vol. 23, 1977, pages 219-227; Dr.K.Worschech: "Recent investigations on the effectiveness of fatty based lubricants in rigid pvc"

## Description

This invention relates to copolymer compositions comprising a major amount of an alternating copolymer of carbon monoxide with one or more olefinically unsaturated compounds and a minor amount of one or more lubricating additives.

The relevant copolymers are characterised by having a linear repeating structure [A-CO] which implies that a unit A is positioned left and right in between carbonyl units. A is a unit derived from an olefinically unsaturated compound. The term "copolymer" includes terpolymers in which different units A are present. Thus, the copolymers are linear copolymers of carbon monoxide with one or more olefinically unsaturated compounds. Examples of suitable olefinically unsaturated compounds yielding a unit A are ethene, propene, butene, octene, styrene and acrylate esters. The copolymers mentioned above are known per se, cf. US-A-3694412, EP-A-121965 and EP-A-181014. Whilst these copolymers have attractive physical and mechanical properties such as yield stress, tensile strength, impact strength and flexural modulus, in some instances their processing properties may leave room for improvement.

Copolymers with a high intrinsic viscosity, or limiting viscosity number (LVN), have better physical properties as engineering thermoplastic than copolymers with a lower intrinsic viscosity. Melt processing, e.g. extrusion, of copolymers, especially when they have an LVN of above about 2.0 dl/g (measured at 60 °C in m-cresol), is adversely affected by a poor melt stability which is apparent from a notable increase of the viscosity of the melt with increasing residence time. In particular in fibre and sheet applications, melt-extrusion is a critical step, even for copolymers with a low LVN. It is evident that improving the stability of the copolymer melt is desirable.

It is known that certain additives, such as carboxylic acid amides and aluminium hydroxyde, act as lubricating additives, in that they improve flow properties of the copolymers. Whilst the addition of said compounds to the copolymers brings about an improvement of flow properties, it appears that especially for melt processing operations in commercial production of moulded parts and extrusion at commercial scale of fibres and sheet, the flow properties still could be improved even further. It is the object of the present invention to provide copolymer compositions having further improved flow properties.

Copolymer compositions comprising a major amount of an alternating copolymer of carbon monoxide with one or more olefinically unsaturated compounds and a minor amount of one or more lubricating additives of the general formula X-R, in which X represents a monovalent polar moiety, comprising 1-4 polar groups, and R represents a monovalent hydrocarbyl radical having 5 to 30 carbon atoms, which is attached to (one of) the polar group(s), are known from EP-A-326224. These lubricating additives include saturated fatty acid amides, fatty acid amides with unsaturated carbon-carbon bonds, and aromatic carboxylic acid amides. One skilled in the art would conclude that the presence of one hydrocarbyl structural element along with a carboxylic acid amide group is a prerequisite for a non-polymeric organic material to be active as a lubricating additive in the copolymers. It will also be expected that any lubricating additive known for, e.g., polyolefins, will not necessarily bring about the desired flow properties in the copolymers, because the vast amount of carbonyl groups renders the copolymers quite different from other polymers.

It has now been found that, when the melt of the copolymers is held under shear, the addition of compounds of which the molecules possess more than one hydrocarbyl radical along with a polar moiety causes the occurrence of less friction in the melt and, surprisingly, the effect of these compounds on the increase in melt viscosity is more pronounced than the effect of fatty acid amides. This is even more surprising, as other compounds, known as lubricating additives for polyolefins, e.g. waxes, do not have any effect. They even render the copolymer unprocessable, possibly because they form a slipping layer between the polymer melt and metal surfaces. Said compounds having more than one hydrocarbyl radical in the molecules act as lubricating additives in the copolymers and are superior to the known carboxylic acid amide lubricating additives which possess only one hydrocarbyl radical. It has been found that, as a result of the better processing, the addition of these lubricating additives also leads to an improvement of mechanical properties of the processed copolymers such as their impact resistance. Compositions of the copolymers with the above mentioned compounds which have more than one hydrocarbyl radical in the molecule are novel.

Accordingly, the invention relates to novel copolymer compositions comprising a major amount of an alternating copolymer of carbon monoxide with one or more olefinically unsaturated compounds and a minor amount of one or more lubricating additives of the general formula X(R)ₙ, in which X represents an n valent polar moiety having 1-4 polar groups having oxygen or oxygen and nitrogen as hetero atom(s), where n is 2, 3 or 4, and each R, independently, represents a monovalent hydrocarbyl radical having 5 to 30 carbon atoms which is attached to a polar group.

The invention also relates to a process for improving flow properties of alternating copolymers of carbon monoxide with one or more olefinically unsaturated compounds comprising the addition thereto of a minor amount of one or more lubricating additives of the general formula X(R)ₙ according to the invention.

The expression "a minor amount" will be clear to those skilled in the art as meaning less than 50 %w based on the weight of the composition in cases where the compositions consist only of polymer and lubricating additive. Generally it will not be necessary to employ more than a certain amount to achieve an acceptable performance. Suitably the total amount of the lubricating additives ranges from 0.01 to 5 %w, more suitably from 0.05 to 3 %w, especially from 0.1 to 1 %w, based on the weight of the composition.

The molecules of the lubricating additives of the invention comprise a polar moiety X which is a polar n valent radical containing one or more polar groups having oxygen or oxygen and nitrogen as heteroatom(s). Typically, the polar group(s) are selected from alcoholic hydroxy groups (-OH), oxy atoms (-O-), carboxylic ester groups (-CO-O-), carboxylic amide groups (-CO-N<) and carboxyl groups (-CO-OH). The polar moiety may, for example, comprise one or two alcoholic hydroxy groups and two carboxylic ester group or one alcoholic hydroxy group and two carboxylic amide groups, or one carboxylic ester group and two alkoxy groups, or two carboxylic ester groups.

The hydrocarbyl radical R has been described hereinbefore as a monovalent radical, being attached to a polar group. It will be clear that in the event that the lubricating additive comprises two or more polar groups in the polar moiety X, the polar moiety may also comprise a polyvalent (cyclo)alkyl or aryl radical which connects said polar groups. For example, when there are two hydrocarbyl radicals and the polar moiety contains two oxy linkages and a carboxyl group, the molecules of the additive may comprise an alkanetriyl radical which interconnects two R-O- and one -CO-OH groups, of which each R-O- originates in one hydrocarbyl radical R and one oxy atom -O-.

Eligible lubricating additives according to the invention are, for example, 1,3,5-tridodecyloxybenzene, bis(4-dodecylphenyl) terephthalate, N,N'-dioleoylpiperazine, 1,3,5-tripalmetylisocyanurate, cetyl linoleate, N,N-didodecyl-3-octylbenzamide, and 1,2-bis(2',2',4',4',6',6'-hexamethylheptanoyl)-hydrazine.

It will be obvious to skilled readers that compounds X(R)ₙ are conceivable which contain two or more polar groups in the polar moiety X and wherein one of the hydrocarbyl radicals R is not attached directly to one of the polar groups, but to the polyvalent (alkyl, cycloalkyl or aryl) radical interconnecting the polar groups. For example, dodecyl 4-methoxy-3-pentadecylbenzoate is conceivable as an equivalent of its isomer dodecyl 4-hexadecyloxybenzoate. On the other hand, such compounds are not as readily accessible by chemical synthesis as those wherein the hydrocarbyl radical R is attached to a polar group.

One skilled in the art will know that certain combinations of polar groups attached to one (cyclo)-alkyl or aryl group may result in unstable compounds. For example, gamma-hydroxycarboxylic acids and certain analogous esters according to the invention will form gamma-lactones upon heating. The compounds thus formed in-situ generally fall within the scope of the invention and are, therefore, considered to be part of the invention.

Typically, the lubricating additives of the invention are of the general formula Y(ZR)ₙ, in which YZₙ is X, and wherein
- Y is an n valent (cyclo)alkyl radical having up to 16 carbon atoms, suitably up to 6 carbon atoms, and may be substituted with one or two groups selected from (a) -OR', (b) -CO-O-R' and (c) -O-CO-R', wherein each R', independently, represents hydrogen or an alkyl group having up to 4 carbon atoms, and
- Z is, independently, selected from (1) -O-, (2) -CO-O-, (3) -CO-N(R'')- and (4) R''-CO-N<, wherein each R'', independently, represents hydrogen or an alkyl group having up to 4 carbon atoms,
R representing the hydrocarbyl radicals as defined hereinbefore. The following compounds represent examples of such additives: N,N'-dioleyl-N,N'-dipentanoyltetramethylenediamine, 1,2,3-tristearyloxypropane, adipic bis(dilaurylamide), and N-(2-montanyloxyethyl) palmetamide.

Although, according to the invention, there may be two, three of four hydrocarbyl radicals in the molecules of the lubricating additives, it is advantageous to have two or three hydrocarbyl radicals because these additives are more readily accessible by synthesis. Accordingly, n is suitably 2 or 3.

Preferred lubricating additives Y(ZR)ₙ of the invention are those in which n is 2 and Y represents a (cyclo)alkylidene radical having up to 6 carbon atoms. Preferred compounds are, e.g., 1,4-cyclohexylene dialpha-linolenate, decyl 2-(4'-octylbenzyl)oxypentanoate, and N,N'-dilauroylhexamethylenediamine. However, more preferred are those compounds wherein Z is -CO-N(R'')-, with R'' as defined hereinbefore, and, particularly, R" representing hydrogen. Such additives may, for example, be the following: N,N'-dimethyl-N,N'-dimyristoyltrimethylenediamine and 1,3-bis(N,N'-ethyl-N,N'-lauryl-carbamoyl)cyclopentane, and, in particular, N,N'-distearoylmethylenediamine. Especially the compounds wherein Y represents an ethylene radical are useful, e.g., N-docosyl-2-(4'-hexylbenzoylamino)propionamide and N,N'-dilinoleylsuccinamide, and, typically, the N,N'-bisamides of ethylene diamine, such as N,N'-didocosanoylethylenediamine and N,N'-dilaurylethylenediamine. N,N'-Distearoylethylenediamine performs excellently as a lubricating additive in the copolymers.

Other preferred lubricating additives Y(ZR)ₙ of the invention are those in which Z represents -CO-O-. More preferred are those wherein Y is an n valent alkyl radical having up to 16 carbon atoms, suitably having three carbon atoms, which may be substituted with one group selected from (a) -OR', (b) -CO-O-R' and (c) -O-CO-R'. Examples of such preferred additives are as follows, trimyristyl 1,3,5-cyclohexanetricarboxylate, bis(4,6,8-trimethylnon-2-yl suberate and 2,2-dimethylpropyl-1,3-ene dilaurate, whereas the more preferred additives are, for example, 1-montanoyloxy-1,3-bisdecanoyloxypropane and dibornyl 2-methoxy-1,3-propanedioate.

Among these compounds, particularly suitable are those, which possess two hydrocarbyl radicals, so that, accordingly, n is 2. Especially suitable are those of which the radical Y is substituted with one -OH group. Examples of such compounds are dilauryl 2-(2'-hydroxyethyl)malonate and glycerol 1,2-dioleate. Typically, the lubricating additive is a glycerol 1,3-diester, e.g., glycerol 1,3-dioctanoate and glycerol 1,3-dimontanate. Glycerol 1,3-distearate is an excellent lubricating additive for the copolymers.

Among the lubricating additives Y(ZR)ₙ of the invention wherein Z represents -CO-O- and Y is an n valent alkyl radical having up to 16 carbon atoms, suitably having three carbon atoms, as indicated above, other compounds are also particularly suitable, viz., those of which n is 2 or 3 and the radical Y is not substituted, for example, tripentadecyl tricarballylate. Typically, the lubricating additive is a glycerol triester, e.g., glycerol 1,2-dioleate 3-stearate and glycerol tripalmetate, or a 2,2-bis(4'-hydroxyphenyl)propane diester, e.g., 2,2-bis(4'-stearoyloxyphenyl)propane. Glycerol tristearate and 2,2-bis(4'-montanyloxyphenyl)propane perform excellently as lubricating additives in the copolymers.

Although the hydrocarbyl radical R may contain 5-30 carbon atoms, it is advantageous to have a hydrocarbyl radical R which comprises 10-30 carbon atoms because this renders the additives less volatile. The radical may contain one or more aromatic or alicyclic ring structures, or its chain of carbon atoms may be branched. Examples of such aromatic ring structures are those of benzene and naphthalene. Alicyclic ring structures are, for example, those of cyclohexane, cycloheptane and norbornane. The hydrocarbyl radical R is preferably a primary radical, i.e. a radical of which the point of attachment to a polar group resides on a carbon atom which bears two hydrogen atoms. More preferably the hydrocarbyl radical R comprises a linear chain of carbon atoms, and most preferably it is also saturated. Lubricating additives derived from a primary radical R possessing a linear and saturated hydrocarbon chain are more stable in cases were degradation reactions via radical pathways play a role. Examples of the more preferred radicals R are the hydrocarbon chains of oleyl alcohol, linoleic acid, stearolic acid and linolenic acid. Examples of the most preferred radicals R are the hydrocarbon chains of myristic acid, stearyl alcohol, stearic acid, palmitic acid and montanic acid.

The lubricating additives may be used alone, or they may be used in combination with one or more additional additives which improve other properties of the compositions such as oxidative stability and UV stability. Such additional additives may be selected from the group formed by sterically hindered phenolic compounds, aromatic amines, hydroxybenzophenones, hydroxyphenylbenzotriazoles, aluminium hydroxides, acid amides of monocarboxylic acids, and copolymers of ethylene and acrylic acid or methacrylic acid. Some of these may be well-known, commercially available additives for polymers. Suitably the hindered phenolic compounds are selected from 2,5-dialkylphenols, from esters of a straight chain alcohol and a hydroxy,dialkylphenyl-substituted carboxylic acid, from 1,2-bis(acetyl)hydrazines in which the acetyl group carries a hydroxy,dialkylphenyl substituent, from N,N'-bis(acetoxyalkyl)oxalamides in which the acetyl group carries a hydroxy,dialkylphenyl substituent, and from alpha-N,omega-N-bis(acetyl)diamines in which the acetyl group carries a hydroxy,dialkylphenyl substituent. Suitable aromatic amines are selected from the group formed by the diphenylamines, such as 4,4'-bisbenzyl-diphenylamines or anilino-diphenylamines, and diaminonaphthalenes, such as N,N,N',N'-tetraalkylaminonaphthalenes. A suitable type of aluminium hydroxide is bayerite.

The alternating copolymer of carbon monoxide with one or more olefinically unsaturated compounds which is part of the compositions of the invention may in particular be a copolymer of carbon monoxide with ethylene or a terpolymer of carbon monoxide, ethylene and propylene. Preferred co- and terpolymers are those having an LVN of from 1.0 to 5.0 dl/g, preferably from 1.3 to 4.0 dl/g, in particular from 2.1 to 3.0 dl/g.

The lubricating additives may be added to the copolymer by various continuous or discontinuous processes, for example, by dry blending and tumbling, by solvent deposition and removal of solvent by evaporation. The copolymer may be present in the form of a powder, or as granulate.

The compositions of this invention can be processed into articles of manufacture such as fibres, films, laminates, tubes, piping and articles having an intricate shape by conventional processing techniques, such as melt spinning, extrusion, co-extrusion, injection moulding and compression moulding.

The lubricating additives of this invention do not only improve the flow of the relevant carbon monoxide/olefin co- and terpolymers, but also render the co- and terpolymer less prone to polymer degradation during melt processing. The performance of these lubricating additives compared to the performance of the known lubricating additives which possess only one hydrocarbon chain is unexpected.

Thus they render processable certain types of copolymers which were hardly processable before the present invention.

### EXAMPLE 1

A terpolymer comprising ethene, propene and carbon monoxide in the form of a granulate, having an LVN of 1.36 dl/g (measured in m-cresol at 60 °C), a crystalline melting point of 222 °C and containing 0.5 %w of the n-octadecyl ester of 3-(3,5-di-t.butyl-4-hydroxyphenyl)propanoic acid and 0.5 %w 2,6-di-t.butyl-4-methylphenol (commercially available anti-oxidants), was mixed with samples of various additives by dry blending and tumbling in air for 85 minutes. Samples of the blends obtained and samples of the terpolymer without additives were transferred into a commercial torque rheometer (designed for characterisation of polyvinylchloride and equipped with two spindles) operated at 240 °C. The torque was measured at a speed of 60 rpm of one spindle and 40 rpm of the other spindle. The results are presented in Table 1.

**TABLE 1**

| Additive (%w) | Initial torque Nm | Rate of increase of torque, Nm/min |
|---|---|---|
| Example: | | |
| N,N'-Distearoylethylenediamine (1.0) | 3.6 | 0.06 |

| Comparative experiments: | | |
|---|---|---|
| None | 4.7 | 5.1 |
| -duplicate- | 4.5 | 5.3 |
| Stearamide (1.0) | 2.2 | 0.13 |
| -duplicate- | 2.8 | 0.10 |

### EXAMPLE 2

A terpolymer comprising ethene, propene and carbon monoxide in the form of a powder, having an LVN of 1.84 dl/g (measured in m-cresol at 60 °C) and a crystalline melting point of 218 °C was mixed with samples of various additives by dry blending and tumbling in air for 5 minutes. Samples of the blends obtained and samples of the terpolymer without additives were extruded in air in a 15 mm twin-screw extruder operated at 275 °C. The relative feed rates were measured while maintaining a constant torque at 300 rpm. Plaques with 0.75 mm thickness were compression moulded by pressing the extruded polymers at 240 °C during 1.5 minutes. The plaques were used in dynamic viscosity measurements over 30 minutes residence time at 275 °C and 1 rad/s, using a parallel plate rheometer. The results are summarised in Table 2.

**TABLE 2**

| Additive (%w) | Relative feed rate | Initial viscosity 10³ Pa.s | Rate* of viscosity increase Pa.s/min |
|---|---|---|---|
| Examples: | | | |
| Glycerol 1,3-distearate (0.3) | 1.6 | 1.7 | 570 |
| Glycerol tristearate (0.3) | 1.9 | 1.7 | 540 |

| Comparative experiments: | | | |
|---|---|---|---|
| None | 1.0^{#} | 2.5 | 1000 |
| Glycerol 1-monostearate (0.3) | 1.5 | 2.0 | 710 |

| | | | |
|---|---|---|---|
| * Average over 30 minutes residence time | | | |
| ^{#} By definition | | | |

### EXAMPLE 3

A terpolymer comprising ethene, propene and carbon monoxide in the form of a powder, having an LVN of 1.85 dl/g (measured in m-cresol at 60 °C) and a crystalline melting point of 222 °C and containing 0.5 %w of 3,5-di-t.butyl-4-hydroxytoluene (a commercially available antioxidant) was mixed with samples of various additives by dry blending and tumbling in air for 5 minutes. Samples of the blends obtained and samples of the terpolymer without additives were injection moulded into 2 mm thick disks having a 60-mm diameter, using a nozzle temperature of 250 °C and a mould temperature of 70 °C. The disks were tested in an instrumented impact tester at a plunger speed of 4.43 m/s using a plunger of 15.7 mm diameter and a disk support of 42 mm. During the test the temperature of the disks was -10°C. The results are summarised in Table 3.

**TABLE 3**

| Additive (%w) | Impact energy J | Brittle failures* % |
|---|---|---|
| Examples: | | |
| N'N'-distearoylethylenediamine (0.2) | 40 | 20 |
| 2,2-bis(4'-montanyloxyphenyl)-propane (0.2) | 47 | 5 |

| Comparative experiment: | | |
|---|---|---|
| None | 34 | 35 |

| | | |
|---|---|---|
| * Relative to the number of samples tested | | |

The compositions which contain glycerol 1,3-distearate, glycerol tristearate, N,N'-distearoylethylenediamine and 2,2-bis(4'-montanyloxyphenyl)-propane are according to the invention, whereas the experiments involving glycerol 1-monostearate and stearamide and those without a lubricating additive have been added for comparison. The values measured for the initial torque and the initial dynamic viscosity show that glycerol 1,3-distearate, glycerol tristearate and N,N'-distearoylethylenediamine lubricate the polymer melt.

In all cases an increase of torque or dynamic viscosity can be seen as a function of residence time in the rheometers. This increase is the result of cross-linking as a consequence of friction and intrinsic melt instability of the copolymers. When looking at the rate of increase of torque and dynamic viscosity it is observed that this rate is diminished by all additives by their lubricating activity and that glycerol 1,3-distearate and glycerol tristearate are in this respect more effective than glycerol 1-monostearate, and N,N'-distearoylethylenediamine is more effective than stearamide. The effects of lubrication are also visible in melt processing by extrusion, by the higher through-put attainable (relative feed rate). In particular, the lubricating additives of the invention perform better than the lubricating additive which possesses only one hydrocarbyl radical in its molecule. Example 3 shows that, as a result of the better processing achieved with the lubricating additives of the invention, the processed terpolymer has an improved impact resistance in that it shows a lesser tendency towards brittle failure and more impact energy can be absorbed.

The examples show very clearly that the presence of more than one hydrocarbyl radical in the molecules of the lubricating additives is of more advantage than having one hydrocarbyl radical and that it is relatively less critical whether the molecule comprises two or three hydrocarbyl radicals. The experiments also show that the nature of the polar moiety is relatively less critical: it may contain carboxylic acid amide groups, carboxylic acid ester groups and alcoholic hydroxy groups in various compositions. In addition, the present lubricating additives may be combined with other additives.

## Claims (Claims for the following Contracting State(s): BE, DE, FR, GB, IT, NL)

1. Copolymer compositions comprising a major amount of an alternating copolymer of carbon monoxide with one or more olefinically unsaturated compounds and a minor amount of one or more lubricating additives of the general formula X(R)ₙ, in which X represents an n valent polar moiety having 1-4 polar groups having oxygen or oxygen and nitrogen as heteroatom(s), where n is 2, 3 or 4 and each R, independently, represents a monovalent hydrocarbyl radical having 5 to 30 carbon atoms which is attached to a polar group.

2. Compositions as claimed in claim 1, characterised in that the lubricating additives are present in an amount of 0.05 to 3 %w, based on the weight of the composition.

3. Compositions as claimed in claim 2, characterised in that the lubricating additives are present in an amount of 0.1 to 1 %w, based on the weight of the composition.

4. Compositions as claimed in any of claims 1-3, characterised in that the lubricating additives are of the general formula Y(ZR)ₙ, in which YZₙ is X, and wherein
- Y is an n valent (cyclo)alkyl radical having up to 16 carbon atoms, and may be substituted with one or two groups selected from (a) -OR', (b) -CO-O-R' and (c) -O-CO-R', wherein each R', independently, represents hydrogen or an alkyl group having up to 4 carbon atoms,
- Z is, independently, selected from (1) -O-, (2) -CO-O-, (3) -CO-N(R")- and (4) R"-CO-N<, wherein each R", independently, represents hydrogen or an alkyl group having up to 4 carbon atoms, and
- n is 2 or 3.

5. Compositions as claimed in claim 4, characterised in that n is 2, Y represents a (cyclo)alkylidene radical having up to 6 carbon atoms, Z is -CO-N(R")-, and R" represents hydrogen.

6. Compositions as claimed in claim 4, characterised in that Z represents -CO-O-, and Y is an n valent alkyl radical having up to 16 carbon atoms which may be substituted with one group selected from (a) -OR', (b) -CO-O-R' and (c) -O-CO-R'.

7. Compositions as claimed in claim 6, characterised in that n is 2, and the radical Y is substituted with one -OH group.

8. Compositions as claimed in claim 6, characterised in that n is 2 or 3 and the radical Y is not substituted.

9. Compositions as claimed in any of claims 1-4, characterised in that the lubricating additive is selected from the group consisting of N,N'-bisamide of ethylene diamines, glycerol 1,3-diesters, glycerol triesters and diesters of 2,2-bis(4'-hydroxyphenyl)-propane.

10. Compositions as claimed in any of claims 1-9, characterised in that the hydrocarbyl radical R is a primary radical, and comprises a saturated, linear chain of 10-30 carbon atoms.

11. Compositions as claimed in any of claims 9 or 10, characterised in that the lubricating additives are selected from the group formed by N,N'-distearoylethylenediamine, glycerol 1,3-distearate, glycerol tristearate and 2,2-bis(4'-montanyloxyphenyl)propane.

12. Compositions as claimed in any of claims 1-11, characterised in that it comprises as the copolymer a copolymer of carbon monoxide with ethylene, or a terpolymer of carbon monoxide, ethylene and propylene, and in that the LVN of the co- or terpolymer is from 1.0 to 5.0 dl/g, in particular from 1.3 to 4.0 dl/g, measured at 60°C in m-cresol.

13. Process for improving flow properties of alternating copolymers of carbon monoxide with one or more olefinically unsaturated compounds comprising the addition thereto of a minor amount of one or more lubricating additives of the general formula X(R)ₙ as defined in any of claims 1-11.

## Claims (Claims for the following Contracting State(s): ES)

1. Process for improving flow properties of alternating copolymers of carbon monoxide with one or more olefinically unsaturated compounds comprising the addition thereto of a minor amount of one or more lubricating additives of the general formula X(R)ₙ in which X represents an n valent polar moiety having 1-4 polar groups having oxygen or oxygen and nitrogen as heteroatom(s), where n is 2, 3 or 4 and each R, independently, represents a monovalent hydrocarbyl radical having 5 to 30 carbon atoms which is attached to a polar group.

2. Process as claimed in claim 1, characterised in that the lubricating additives are added in an amount of 0.05 to 3 %w, based on the weight of the composition.

3. Process as claimed in claim 2, characterised in that the lubricating additives are added in an amount of 0.1 to 1 %w, based on the weight of the composition.

4. Process as claimed in any of claims 1-3, characterised in that the lubricating additives are of the general formula Y(ZR)ₙ, in which YZₙ is X, and wherein
- Y is an n valent (cyclo)alkyl radical having up to 16 carbon atoms, and may be substituted with one or two groups selected from (a) -OR', (b) -CO-O-R' and (c) -O-CO-R', wherein each R', independently, represents hydrogen or an alkyl group having up to 4 carbon atoms,
- Z is, independently, selected from (1) -O-, (2) -CO-O-, (3) - O-N(R")- and (4) R"-CO-N<, wherein each R", independently, represents hydrogen or an alkyl group having up to 4 carbon atoms, and
- n is 2 or 3.

5. Process as claimed in claim 4, characterised in that n is 2, Y represents a (cyclo)alkylidene radical having up to 6 carbon atoms, Z is -CO-N(R")-, and R" represents hydrogen.

6. Process as claimed in claim 4, characterised in that Z represents -CO-O-, and Y is an n valent alkyl radical having up to 16 carbon atoms which may be substituted with one group selected from (a) -OR', (b) -CO-O-R' and (c) -O-CO-R'.

7. Process as claimed in claim 6, characterised in that n is 2, and the radical Y is substituted with one -OH group.

8. Process as claimed in claim 6, characterised in that n is 2 or 3 and the radical Y is not substituted.

9. Process as claimed in any of claims 1-4, characterised in that the lubricating additive is selected from the group consisting of N,N'-bisamide of ethylene diamines, glycerol 1,3-diesters, glycerol triesters and diesters of 2,2-bis(4'-hydroxyphenyl)propane.

10. Process as claimed in any of claims 1-9, characterised in that the hydrocarbyl radical R is a primary radical, and comprises a saturated, linear chain of 10-30 carbon atoms.

11. Process as claimed in any of claims 9 or 10, characterised in that the lubricating additives are selected from the group formed by N,N'-distearoylethylenediamine, glycerol 1,3-distearate, glycerol tristearate and 2,2-bis(4'-montanyloxyphenyl)propane.

12. Process as claimed in any of claims 1-11, characterised in that it comprises as the copolymer a copolymer of carbon monoxide with ethylene, or a terpolymer of carbon monoxide, ethylene and propylene, and in that the LVN of the co- or terpolymer is from 1.0 to 5.0 dl/g, in particular from 1.3 to 4.0 dl/g, measured at 60 °C in m-cresol.

## Patentansprüche (Patentansprüche für folgende(n) Vertragsstaat(en): BE, DE, FR, GB, IT, NL)

1. Copolymerzusammensetzungen, die eine größere Menge eines alternierenden Copolymers aus Kohlenmonoxid und einer oder mehreren olefinisch ungesättigten Verbindungen und eine kleinere Menge eines oder mehrerer Gleitmittelzusätze der allgemeinen Formel X(R)ₙ enthalten, worin X eine n-wertige polare Gruppierung mit 1-4 polaren Gruppen mit Sauerstoff oder Sauerstoff und Stickstoff als Heteroatom(en) bedeutet, wobei n gleich 2, 3 oder 4 ist und R jeweils voneinander unabhängig einen an eine polare Gruppe gebundenen einwertigen Kohlenwasserstoffrest mit 5 bis 30 Kohlenstoffatomen bedeutet.

2. Zusammensetzungen nach Anspruch 1, dadurch gekennzeichnet, daß die Gleitmittelzusätze in einer Menge von 0,05 bis 3 Gew.-%, bezogen auf das Gewicht der Zusammensetzung, enthalten sind.

3. Zusammensetzungen nach Anspruch 2, dadurch gekennzeichnet, daß die Gleitmittelzusätze in einer Menge von 0,1 bis 1 Gew.-%, bezogen auf das Gewicht der Zusammensetzung, enthalten sind.

4. Zusammensetzungen nach einem der Ansprüche 1-3, dadurch gekennzeichnet, daß die Gleitmittelzusätze die allgemeine Formel Y(ZR)ₙ besitzen, wobei YZₙ gleich X ist und worin
- Y einen n-wertigen (Cyclo)alkylrest mit bis zu 16 Kohlenstoffatomen darstellt, der mit einer oder zwei Gruppen substituiert sein kann, die man unter (a) -OR', (b) -CO-O-R' und (c) -O-CO-R' auswählt, wobei die Gruppen R' voneinander unabhängig jeweils Wasserstoff oder eine Alkylgruppe mit bis zu 4 Kohlenstoffatomen bedeuten,
- Z unabhängig davon aus (1) -O-, (2) -CO-O-, (3) -CO-N(R")- und (4) R"-CO-N< ausgewählt ist, wobei die Gruppen R" voneinander unabhängig jeweils Wasserstoff oder eine Alkylgruppe mit bis zu 4 Kohlenstoffatomen bedeuten, und
- n gleich 2 oder 3 ist.

5. Zusammensetzungen nach Anspruch 4, dadurch gekennzeichnet, daß n gleich 2 ist, Y einen (Cyclo)alkylidenrest mit bis zu 6 Kohlenstoffatomen bedeutet und Z für -CO-N(R")- steht, wobei R" Wasserstoff bedeutet.

6. Zusammensetzungen nach Anspruch 4, dadurch gekennzeichnet, daß Z für -CO-O- steht und Y einen n-wertigen Alkylrest mit bis zu 16 Kohlenstoffatomen, der mit einer aus (a) -OR', (b) -CO-O-R' und (c) -O-CO-R' ausgewählten Gruppe substituiert sein kann, bedeutet.

7. Zusammensetzungen nach Anspruch 6, dadurch gekennzeichnet, daß n gleich 2 ist und der Rest Y mit einer -OH-Gruppe substituiert ist.

8. Zusammensetzungen nach Anspruch 6, dadurch gekennzeichnet, daß n gleich 2 oder 3 ist und der Rest Y nicht substituiert ist.

9. Zusammensetzungen nach einem der Ansprüche 1-4, dadurch gekennzeichnet, daß man den Gleitmittelzusatz aus der Gruppe aus dem N,N'-Bisamid von Ethylendiaminen, Glycerin-1,3-diestern, Glycerintriestern und Diestern von 2,2-Bis(4'-hydroxyphenyl)propan auswählt.

10. Zusammensetzungen nach einem der Ansprüche 1-9, dadurch gekennzeichnet, daß der Kohlenwasserstoffrest R einen primären Rest darstellt und eine gesättigte, lineare Kette aus 10-30 Kohlenstoffatomen enthält.

11. Zusammensetzungen nach einem der Ansprüche 9 oder 10, dadurch gekennzeichnet, daß man die Gleitmittelzusätze aus der Gruppe aus N,N'-Distearoylethylendiamin, Glycerin-1,3-distearat, Glycerintristearat und 2,2-Bis (4'-montanyloxyphenyl)propan auswählt.

12. Zusammensetzungen nach einem der Ansprüche 1-11, dadurch gekennzeichnet, daß sie als Copolymer ein Copolymer aus Kohlenmonoxid und Ethylen oder ein Terpolymer aus Kohlenmonoxid, Ethylen und Propylen enthält und daß die bei 60°C in m-Kresol gemessene GVZ des Co-bzw. Terpolymers 1,0 bis 5,0 dl/g, insbesondere 1,3 bis 4, 0 dl/g beträgt.

13. Verfahren zur Verbesserung der Fließeigenschaften von alternierenden Copolymeren aus Kohlenmonoxid und einer oder mehreren olefinisch ungesättigten Verbindungen, bei dem man zu diesen eine kleinere Menge eines oder mehrerer Gleitmittelzusätze der allgemeinen Formel X(R)ₙ nach einem der Ansprüche 1-11 gibt.

## Patentansprüche (Patentansprüche für folgende(n) Vertragsstaat(en): ES)

1. Verfahren zur Verbesserung der Fließeigenschaften alternierender Copolymere aus Kohlenmonoxid und einem oder mehreren olefinisch ungesättigten Verbindungen, bei dem man diesen einen kleineren Anteil eines oder mehrerer Gleitmittelzusätze der allgemeinen Formel X(R)ₙ, worin X eine n-wertige polare Gruppierung mit 1-4 polaren Gruppen mit Sauerstoff oder Sauerstoff und Stickstoff als Heteroatom(en) bedeutet, wobei n gleich 2, 3 oder 4 ist und R jeweils voneinander unabhängig einen an eine polare Gruppe gebundenen einwertigen Kohlenwasserstoffrest mit 5 bis 30 Kohlenstoffatomen bedeutet, zugibt.

2. Verfahren nach Anspruch 1, dadurch gekennzeichnet, daß man die Gleitmittelzusätze in einer Menge von 0,05 bis 3 Gew.-%, bezogen auf das Gewicht der Zusammensetzung, zugibt.

3. Verfahren nach Anspruch 2, dadurch gekennzeichnet, daß man die Gleitmittelzusätze in einer Menge von 0,1 bis 1 Gew.-%, bezogen auf das Gewicht der Zusammensetzung, zugibt.

4. Verfahren nach einem der Ansprüche 1-3, dadurch gekennzeichnet, daß die Gleitmittelzusätze die allgemeine Formel Y(ZR)ₙ besitzen, wobei YZₙ gleich X ist und worin
- Y einen n-wertigen (Cyclo)alkylrest mit bis zu 16 Kohlenstoffatomen darstellt, der mit einer oder zwei Gruppen substituiert sein kann, die man unter (a) -OR', (b) -CO-O-R' und (c) -O-CO-R' auswählt, wobei die Gruppen R' voneinander unabhängig jeweils Wasserstoff oder eine Alkylgruppe mit bis zu 4 Kohlenstoffatomen bedeuten,
- Z unabhängig davon aus (1) -O-, (2) -CO-O, (3) - O-N(R")- und (4) R"-CO-N< ausgewählt ist, wobei die Gruppen R" voneinander unabhängig jeweils Wasserstoff oder eine Alkylgruppe mit bis zu 4 Kohlenstoffatomen bedeuten, und
- n gleich 2 oder 3 ist.

5. Verfahren nach Anspruch 4, dadurch gekennzeichnet, daß n gleich 2 ist, Y einen (Cyclo)alkylidenrest mit bis zu 6 Kohlenstoffatomen bedeutet und Z für -CO-N(R")- steht, wobei R" Wasserstoff bedeutet.

6. Verfahren nach Anspruch 4, dadurch gekennzeichnet, daß Z für -CO-O- steht und Y einen n-wertigen Alkylrest mit bis zu 16 Kohlenstoffatomen, der mit einer aus (a) -OR', (b) -CO-O-R' und (c) -O-CO-R' ausgewählten Gruppe substituiert sein kann, bedeutet.

7. Verfahren nach Anspruch 6, dadurch gekennzeichnet, daß n gleich 2 ist und der Rest Y mit einer -OH-Gruppe substituiert ist.

8. Verfahren nach Anspruch 6, dadurch gekennzeichnet, daß n gleich 2 oder 3 ist und der Rest Y nicht substituiert ist.

9. Verfahren nach einem der Ansprüche 1-4, dadurch gekennzeichnet, daß man den Gleitmittelzusatz aus der Gruppe aus dem N,N'-Bisamid von Ethylendiaminen, Glycerin-1,3-diestern, Glycerintriestern und Diestern von 2,2-Bis (4'-hydroxyphenyl)propan auswählt.

10. Verfahren nach einem der Ansprüche 1-9, dadurch gekennzeichnet, daß der Kohlenwasserstoffrest R einen primären Rest darstellt und eine gesättigte, lineare Kette aus 10-30 Kohlenstoffatomen enthält.

11. Verfahren nach einem der Ansprüche 9 oder 10, dadurch gekennzeichnet, daß man die Gleitmittelzusätze aus der Gruppe aus N,N'-Distearoylethylendiamin, Glycerin-1,3-distearat, Glycerintristearat und 2,2-Bis(4'-montanyloxyphenyl)propan auswählt.

12. Verfahren nach einem der Ansprüche 1-11, dadurch gekennzeichnet, daß man als Copolymer ein Copolymer aus Kohlenmonoxid und Ethylen oder ein Terpolymer aus Kohlenmonoxid, Ethylen und Propylen auswählt und daß die bei 60°C in m-Kresol gemessene GVZ des Co- bzw. Terpolymers 1,0 bis 5,0 dl/g, insbesondere 1,3 bis 4, 0 dl/g beträgt.

## Revendications (Revendications pour l'(les) Etat(s) contractant(s) suivant(s): BE, DE, FR, GB, IT, NL)

1. Compositions de copolymères comprenant une proportion majeure d'un polymère alternant du monoxyde de carbone et d'un ou plusieurs composés à insaturation oléfinique et une proportion mineure d'un ou plusieurs additifs lubrifiants de la formule générale X(R)ₙ, dans laquelle X représente un groupement polaire n-valent possédant 1 à 4 radicaux polaires possédant de l'oxygène ou de l'oxygène et de l'azote à titre d'hétéroatomes, où n est égal à 2, 3 ou 4 et chaque symbole R représente indépendamment un radical hydrocarbyle monovalent qui comporte de 5 à 30 atomes de carbone, qui est attaché à un radical ou groupe polaire.

2. Compositions suivant la revendication 1, caractérisées en ce que les additifs lubrifiants y sont présents en une quantité de 0,05 à 3% en poids, sur base du poids de la composition.

3. Compositions suivant la revendication 2, caractérisées en ce que les additifs lubrifiants y sont présents en une quantité de 0,1 à 1% en poids, sur base du poids de la composition.

4. Compositions suivant l'une quelconque des revendications 1 à 3, caractérisées en ce que les additifs lubrifiants répondent à la formule générale Y(ZR)ₙ dans laquelle YZₙ est X et dans laquelle
- Y représente un radical (cyclo)alkyle n-valent comportant jusqu'à 16 atomes de carbone et peut être substitué par un ou deux radicaux choisis parmi (a) -OR', (b) -CO-O-R' et (c) -O-CO-R', où chaque symbole R' représente indépendamment un atome d'hydrogène ou un radical alkyle qui comporte jusqu'à 4 atomes de carbone et
- Z est indépendamment choisi parmi (1) -O-, (2) -CO-O-, (3) -CO-N(R")- et (4) R"-CO-N<, où chaque symbole R" représente indépendamment un atome d'hydrogène ou un radical alkyle comportant jusqu'à 4 atomes de carbone, et
- n est égal à 2 ou à 3.

5. Compositions suivant la revendication 4, caractérisées en ce que n est égal à 2, Y représente un radical (cyclo)alkylidène possédant jusqu'à 6 atomes de carbone, Z représente -CO-N(R")- et R" représente un atome d'hydrogène.

6. Compositions suivant la revendication 4, caractérisées en ce que Z représente -CO-O et Y représente un radical alkyle n-valent possédant jusqu'à 16 atomes de carbone, qui peut être substitué par un radical choisi parmi (a) -OR', (b) -CO-OR' et (c) -O-CO-R'.

7. Compositions suivant la revendication 6, caractérisées en ce que n est égal à 2 et le radical Y est substitué par un groupe -OH.

8. Compositions suivant la revendication 6, caractérisées en ce que n est égal à 2 ou à 3 et le radical Y n'est pas substitué.

9. Compositions suivant l'une quelconque des revendications 1 à 4, caractérisées en ce que l'additif lubrifiant est choisi dans le groupe formé par le N,N-bisamide d'éthylènediamines, les 1,3-diesters du glycérol, les triesters du glycérol et les diesters du 2,2-bis(4'-hydroxyphényl)propane.

10. Compositions suivant l'une quelconque des revendications 1 à 9, caractérisées en ce que le radical hydrocarbyle R est un radical primaire et comprend une chaîne linéaire et saturée de 10 à 30 atomes de carbone.

11. Compositions suivant l'une quelconque des revendications 9 et 10, caractérisées en ce que les additifs lubrifiants sont choisis dans le groupe formé par la N,N'-distéaroyléthylènediamine, le 1,3-distéarate de glycérol, le tristéarate de glycérol et le 2,2-bis-(4'-montanyloxyphényl)propane.

12. Compositions suivant l'une quelconque des revendications 1 à 11, caractérisées en ce qu'elles comprennent, à titre de copolymère, un copolymère du monoxyde de carbone et de l'éthylène, ou un terpolymère du monoxyde de carbone de l'éthylène et du propylène et en ce que L'IVL du copolymère ou du terpolymère varie de 1,0 à 5,0 dl/g, plus particulièrement de 1,3 à 4,0 dl/g, mesuré à 60°C dans le m-crésol.

13. Procédé d'amélioration des propriétés d'écoulement de copolymères alternants du monoxyde de carbone et d'un ou plusieurs composés à insaturation oléfinique, caractérisé en ce qu'il comprend l'addition à ces copolymères d'une proportion mineure d'un ou plusieurs additifs lubrifiants répondant à la formule générale X(R)ₙ tels que définis dans l'une quelconque des revendications 1 à 11.

## Revendications (Revendications pour l'(les) Etat(s) contractant(s) suivant(s): ES)

1. Procédé d'amélioration des propriétés d'écoulement de copolymères alternants du monoxyde de carbone et d'un ou plusieurs composés à insaturation oléfinique, caractérisé en ce qu'il comprend l'addition à ces copolymères d'une proportion mineure d'un ou plusieurs additifs lubrifiants de la formule générale X(R)ₙ, dans laquelle X représente un groupement polaire n-valent possédant 1 à 4 radicaux polaires possédant de l'oxygène ou de l'oxygène et de l'azote à titre d'hétéroatomes, où n est égal à 2, 3 ou 4 et chaque symbole R représente indépendamment un radical hydrocarbyle monovalent qui comporte de 5 à 30 atomes de carbone, qui est attaché à un radical ou groupe polaire.

2. Procédé suivant la revendication 1, caractérisé en ce que l'on ajoute les additifs lubrifiants en une quantité de 0,05 à 3% en poids, sur base du poids de la composition.

3. Procédé suivant la revendication 2, caractérisé en ce que l'on ajoutes les additifs lubrifiants en une quantité de 0,1 à 1% en poids, sur base du poids de la composition.

4. Procédé suivant l'une quelconque des revendications 1 à 3, caractérisé en ce que les additifs lubrifiants répondent à la formule générale Y(ZR)ₙ dans laquelle YZₙ est X et dans laquelle
- Y représente un radical (cyclo)alkyle n-valent comportant jusqu'à 16 atomes de carbone et peut être substitué par un ou deux radicaux choisis parmi (a) -OR', (b) -CO-O-R' et (c) -O-CO-R', où chaque symbole R' représente indépendamment un atome d'hydrogène ou un radical alkyle qui comporte jusqu'à 4 atomes de carbone et
- Z est indépendamment choisi parmi (1) -O-, (2) -CO-O-, (3) -CO-N(R")- et (4) R"-CO-N<, où chaque symbole R" représente indépendamment un atome d'hydrogène ou un radical alkyle comportant jusqu'à 4 atomes de carbone, et
- n est égal à 2 ou à 3.

5. Procédé suivant la revendication 4, caractérisé en ce que n est égal à 2, Y représente un radical (cyclo)alkylidène possédant jusqu'à 6 atomes de carbone, Z représente -CO-N(R")- et R" représente un atome d'hydrogène.

6. Procédé suivant la revendication 4, caractérisé en ce que Z représente -CO-O et Y représente un radical alkyle n-valent possédant jusqu'à 16 atomes de carbone, qui peut être substitué par un radical choisi parmi (a) -OR', (b) -CO-OR' et (c) -O-CO-R'.

7. Procédé suivant la revendication 6, caractérisé en ce que n est égal à 2 et le radical Y est substitué par un groupe -OH.

8. Procédé suivant la revendication 6, caractérisé en ce que n est égal à 2 ou à 3 et le radical Y n'est pas substitué.

9. Procédé suivant l'une quelconque des revendications 1 à 4, caractérisé en ce que l'additif lubrifiant est choisi dans le groupe formé par le N,N-bis-amide d'éthylènediamines, les 1,3-diesters du glycérol, les triesters du glycérol et les diesters du 2,2-bis(4'-hydroxyphényl)propane.

10. Procédé suivant l'une quelconque des revendications 1 à 9, caractérisé en ce que le radical hydrocarbyle R est un radical primaire et comprend une chaîne linéaire et saturée de 10 à 30 atomes de carbone.

11. Procédé suivant l'une quelconque des revendications 9 et 10, caractérisé en ce que les additifs lubrifiants sont choisis dans le groupe formé par la N,N'-distéaroyléthylènediamine, le 1,3-distéarate de glycérol, le tristéarate de glycérol et le 2,2-bis(4'-montanyloxyphényl)propane.

12. Procédé suivant l'une quelconque des revendications 1 à 11, caractérisé en ce qu'il comprend, à titre de copolymère, un copolymère du monoxyde de carbone et de l'éthylène, ou un terpolymère du monoxyde de carbone de l'éthylène et du propylène et en ce que l'IVL du copolymère ou du terpolymère varie de 1,0 à 5,0 dl/g, plus particulièrement de 1,3 à 4,0 dl/g, mesuré à 60°C dans le m-crésol.
